# EUROPÄISCHE PATENTANMELDUNG

(11) **EP 1 099 383 A2**
(43) Veröffentlichungstag der Anmeldung: **16.05.2001**
(21) Anmeldenummer: 00122587.9
(22) Anmeldetag: 17.10.2000
(51) Int. Cl.: A23B 9/26, A23B 9/02

(54) **Verfahren zur Haltbarmachung von Hanfsamen**

(30) Priorität: 10.11.1999 DE 19954153
(71) Anmelder: Prima materia GmbH, 74842 Billigheim-Allfeld (DE)
(72) Erfinder: Preidl, Michael, 74177 Bad Friedrichshall (DE); Lörch, Thomas, 76534 Baden-Baden (DE)
(74) Vertreter: Pfiz, Thomas, Dr.

(57) **Zusammenfassung**

Die Erfindung betrifft ein Verfahren zur Haltbarmachung von Hanfsamen, insbesondere für Lebensmittel, Nahrungsergänzungsmittel und Futtermittel, bei welchem Hanfsamen als Ausgangsgut mechanisch vorbehandelt, insbesondere zerkleinert, geschrotet, gemahlen, gepreßt, geschält und/oder angerissen werden. Um Zersetzungsprozesse erheblich zu verlangsamen, wird vorgeschlagen, daß das Ausgangsgut mit einem Antioxidationsmittel beaufschlagt und durch Erwärmen auf eine Temperatur zwischen 40°C und 300°C wärmebehandelt wird.

## Beschreibung

Die Erfindung betrifft ein Verfahren zur Haltbarmachung von Hanfsamen, insbesondere für Lebensmittel, Nahrungsergänzungsmittel und Futtermittel, bei welchem Hanfsamen als Ausgangsgut mechanisch vorbehandelt, insbesondere zerkleinert, geschrotet, gemahlen, gepreßt, geschält und/oder angerissen werden. Die Erfindung betrifft weiter nach diesem Verfahren aufbereitete Hanfsamen sowie solche Hanfsamen enthaltende Hanfbackwaren.

Hanfsamen sind die Frucht der Hanfpflanze "Cannabis Sativa L." und bestehen aus einem Nüßchen, das von einer dünnen, glasigen Fruchtschale umgeben ist. Sie enthalten hochwertige Inhaltsstoffe wie ungesättigte Fettsäuren, Proteine, wichtige Mineralstoffe, essentielle Aminosäuren und Ballaststoffe und besitzen damit als Nahrungsmittelzusatz eine gesundheitsfördernde Wirkung. In ernährungsphysiologischer Hinsicht ist es wünschenswert, möglichst alle Samenbestandteile zu verwenden. Eine Schwierigkeit besteht darin, daß Hanfsamen als ganzes Korn aufgrund der harten Schalen sensorisch eher wenig ansprechend sind und das Mundgefühl negativ beeinflussen. Bei Zerkleinerung tritt jedoch das Problem auf, daß die Hanfsamen innerhalb kurzer Zeit ranzig werden.

Ausgehend hiervon liegt der Erfindung die Aufgabe zugrunde, die vorgenannten Nachteile zu überwinden und Hanfsamen bei verlängerter Haltbarkeit in eine gebrauchsgerechte und zugleich schmackhafte Form zu bringen. Weiter soll eine solche Hanfsamen enthaltende vorteilhafte Hanfbackware angegeben werden.

Zur Lösung dieser Aufgabe wird die in den Patentansprüchen 1, 15 und 16 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den Verderb und insbesondere das Ranzigwerden mechanisch behandelter Hanfsamen durch geeignete Maßnahmen möglichst weit zu unterdrücken. Dementsprechend wird erfindungsgemäß vorgeschlagen, daß das Ausgangsgut mit einem Antioxidationsmittel beaufschlagt und durch Erwärmen auf eine Temperatur zwischen 40°C und 300°C wärmebehandelt wird. Durch Zugabe von Antioxidantien können unerwünschte Reaktionen frühzeitig unterdrückt und insbesondere autokatalytisch ablaufende Oxidationsprozesse unterbunden werden. Durch die thermische Behandlung werden im Zerkleinerungsgut enthaltene oxidativ wirkende Enzyme inaktiviert (denaturiert) und zugleich geschmackliche Verbesserungen erzielt. Durch die Kombination dieser Maßnahmen wird die Haltbarkeitsdauer beträchtlich erhöht, so daß zerkleinerte Hanfsamen als selbständiges gebrauchsfertiges Handelsgut lager- und verkaufsfähig bleiben.

Vorteilhafterweise werden die Hanfsamen bei einer Temperatur unter 15°C, vorzugsweise bei etwa 0°C zerkleinert, um sie gleichsam kalt zu knacken. Dabei werden zugleich solche Reaktionen verlangsamt, die den Verderb vor allem an den frischen Schnittflächen beschleunigen. Hierbei hat sich ein Kühlkutter als vorteilhaft erwiesen.

Um auf einfache Weise eine gute Vermengung zu erzielen, wird das Antioxidationsmittel während der Vorbehandlung, insbesondere Zerkleinerung der Hanfsamen zugesetzt. Eine besonders effektive Unterdrückung störender Oxidationsprozesse läßt sich dadurch erreichen, daß das Ausgangsgut erst nach der Zugabe des Antioxidationsmittels wärmebehandelt wird. Besonders günstig auch im Hinblick auf die Erzeugung geschmacksverbessernder Röststoffe sowie die Verringerung des Wasseranteils ist es, wenn das Ausgangsgut über einen Zeitraum von 5 bis 15 Minuten, vorzugsweise etwa 10 Minuten bei einer Temperatur zwischen 80 und 160°C, vorzugsweise bei etwa 120°C getoastet wird.

Eine besonders homogene Verteilung läßt sich dadurch erzielen, daß das Antioxidationsmittel als Komponente einer vorzugsweise durch Alkohol oder Speiseöl gebildeten Trägerflüssigkeit zugesetzt wird. Bei der anschließenden Wärmebehandlung kann dann zumindest ein Teil der Trägerflüssigkeit wieder verdunstet oder verdampft werden. Um diesen Prozeß zu fördern, kann die Wärmebehandlung des Ausgangsguts in einem Vakuumtrockner vorgenommen werden. Damit wird auch erreicht, daß reaktiver Sauerstoff bei höheren Temperaturen nicht hinzutreten kann.

Als besonders günstig hat es sich erwiesen, wenn das Antioxidationsmittel aus einem aus Salbei und/oder Rosmarin gewonnenen Naturstoff besteht. Vorteilhafterweise enthält das Antioxidationsmittel Diterpenphenole als Wirkstoffe, insbesondere Carnosolsäure, Carnosol, Rosmanol.

Eine weitere geschmackliche Verbesserung läßt sich dadurch erreichen, daß ein Milch- oder Sojaprodukt als Maskierungsmittel gegen Bittergeschmack zugesetzt wird. Hierfür wird Milchpulver und/oder ein Caseinat, vorzugsweise Natrium-Caseinat bevorzugt eingesetzt.

Um den arteigenen Geschmack positiv zu beeinflussen, können Hanfblütenextrakte und/oder Schalenbestandteile von Hanfsamen zugesetzt werden.

Zur weiteren Verbesserung der Haltbarkeit ist es von besonderem Vorteil, wenn das aufbereitete Ausgangsgut in einem Behältnis, vorzugsweise einem lichtdichten Folienbeutel unter Vakuum oder Inertgas gegen Zutritt von Sauerstoff geschützt verpackt wird.

Ein weiterer Lösungsaspekt sind Hanfsamen, insbesondere als gesonderte Komponente einer Backmischung, die nach dem erfindungsgemäßen Verfahren hergestellt bzw. aufbereitet sind.

Solche Hanfsamen eignen sich besonders gut als Komponente von Hanfbackwaren, insbesondere Hanfbrot. Hier ist es zur Verbesserung der Frischhaltung und Verarbeitungseigenschaften günstig, wenn Süßlupinenmehl als Zusatzstoff enthalten ist. Eine verbessertes Wasserbindevermögen läßt sich durch Zugabe von Kartoffelflocken erreichen.

### Ausführungsbeispiel

Eine Probe A von Hanfsamen der Sorte Fedora 19 wurde bei ca. 0°C in einem Kühlkutter unter gleichzeitiger Zugabe von alkoholischem Salbeiextrakt als Antioxidationsmittel zerkleinert. Der Anteil des Salbeiextakts bezogen auf die in den Hanfsamen enthaltene Fettmenge betrug 0,005Gew%. Der Zerteilungsgrad lag bei durchschnittlich ca. 0,5 mm.

In dem Salbeiextrakt waren folgende antioxidative Wirkstoffe (Diterpenphenole) enthalten:

| | |
|---|---|
| Rosmanol | 0,71% |
| 7-Methyl-Rosmanol | 0,29% |
| Carnosol | 5,51% |
| Carnosolsäure | 29,64% |
| 12-Methyl-Carnosolsäure | 9,56% |

Die so behandelten Hanfsamen wurden bei einer Temperatur von 120°C über einen Zeitraum von 10 Minuten in einem Vakuumtrockner getoastet.

Eine Probe B wurde entsprechend der Probe A zerkleinert und mit Salbeiextrakt beaufschlagt, jedoch nicht getoastet.

Eine Probe C wurde entsprechend der Probe A zerkleinert und getoastet, jedoch nicht mit Salbeiextrakt versetzt.

Eine Probe D setzte sich aus unbehandelten ganzen Hanfsamen zusammen.

Die Proben A bis D wurden in Folienbeuteln aus einem PET-Aluminiumverbund unter Vakuum lichtdicht gelagert. Aus den Proben wurde in vorgegebenen Zeitintervallen in bekannter Weise Hanföl extrahiert und daran die Säurezahl (SZ) und die Peroxidzahl (POZ) als Maß für die Haltbarkeit bestimmt. Allgemein gilt, daß die negative geschmackliche Veränderung (Ranzigkeit) mit diesen Werten zunimmt. Es ergaben sich die in der folgenden Tabelle aufgeführten Ergebnisse:

| Probe | Lagerzeit (Wochen) | | | | | |
|---|---|---|---|---|---|---|
| | 0 (frisch) | | 2 | | 4 | |
| | POZ | SZ | POZ | SZ | POZ | SZ |
| A | 0,38 | 0,54 | 0,94 | 1,52 | 1,36 | 1,94 |
| B | 1,02 | 2,11 | 1,70 | 2,85 | 1,74 | 2,50 |
| C | 0,55 | 1,30 | 3,38 | 2,13 | 1,67 | 2,90 |
| D | 0,92 | 0,63 | 3,62 | 2,4 | 2,61 | 1,73 |

Bei der mit Salbeiextrakt stabilisierten und getoaste-ten Probe A ist die Säurezahl deutlich kleiner als bei den Vergleichsproben B und C. Der ebenfalls niedrige Wert bei Probe D ist dadurch zu erklären, daß enzymatische Prozesse am unbeschädigten Hanfsamen langsamer ablaufen. Der Rückgang der Säurezahl bei den Proben B und D nach 4 Wochen beruht darauf, daß die Enzyme das Saatgut bereits nach 2 Wochen weitgehend zersetzt haben und die enzymatischen Prozesse später zum Erliegen kommen. Auch die Peroxidzahl ist bei der Probe A gegenüber den Vergleichsproben deutlich kleiner.

Im Ergebnis besitzt die Probe A die längste Haltbarkeit und übertrifft dabei selbst unzerkleinerten Hanfsamen. Aus den Meßwerten läßt sich eine Mindesthaltbarkeit von mehr als 6 Monaten extrapolieren.

## Patentansprüche

1. Verfahren zur Haltbarmachung von Hanfsamen, insbesondere für Lebensmittel, Nahrungsergänzungsmittel und Futtermittel, bei welchem Hanfsamen als Ausgangsgut mechanisch vorbehandelt, insbesondere zerkleinert, geschrotet, gemahlen, gepreßt, geschält und/oder angerissen werden, **dadurch gekennzeichnet,** daß das Ausgangsgut mit einem Antioxidationsmittel beaufschlagt und durch Erwärmen auf eine Temperatur zwischen 40°C und 300°C wärmebehandelt wird.

2. Verfahren nach Anspruch 1, **dadurch gekennzeichnet,** daß die Hanfsamen vorzugsweise in einem Kühlkutter bei einer Temperatur unter 15°C, vorzugsweise bei etwa 0°C zerkleinert werden.

3. Verfahren nach Anspruch 1 oder 2, **dadurch gekennzeichnet,** daß das Antioxidationsmittel während der Vorbehandlung, insbesondere Zerkleinerung der Hanfsamen zugesetzt wird.

4. Verfahren nach einem der Ansprüche 1 bis 3, **dadurch gekennzeichnet,** daß das Ausgangsgut nach der Zugabe des Antioxidationsmittels wärmebehandelt wird.

5. Verfahren nach einem der Ansprüche 1 bis 4, **dadurch gekennzeichnet,** daß das Ausgangsgut über einen Zeitraum von 5 bis 15 Minuten, vorzugsweise etwa 10 Minuten bei einer Temperatur zwischen 80 und 160°C, vorzugsweise bei etwa 120°C getoastet wird.

6. Verfahren nach einem der Ansprüche 1 bis 5, **dadurch gekennzeichnet,** daß das Antioxidationsmittel als Komponente einer vorzugsweise durch Alkohol oder Speiseöl gebildeten Trägerflüssigkeit zugesetzt wird.

7. Verfahren nach Anspruch 6, **dadurch gekennzeichnet,** daß zumindest ein Teil der Trägerflüssigkeit bei der Wärmebehandlung verdunstet oder verdampft wird.

8. Verfahren nach einem der Ansprüche 1 bis 6, **dadurch gekennzeichnet,** daß das Ausgangsgut in einem Vakuumtrockner wärmebehandelt wird.

9. Verfahren nach einem der Ansprüche 1 bis 7, **dadurch gekennzeichnet,** daß das Antioxidationsmittel aus einem aus Salbei und/oder Rosmarin gewonnenen Naturstoff besteht.

10. Verfahren nach einem der Ansprüche 1 bis 8, **dadurch gekennzeichnet,** daß das Antioxidationsmittel Diterpenphenole, insbesondere Carnosolsäure, Carnosol oder Rosmanol als Wirkstoff enthält.

11. Verfahren nach einem der Ansprüche 1 bis 9, **dadurch gekennzeichnet,** daß ein Milch- oder Sojaprodukt, vorzugsweise Milchpulver als Maskierungsmittel gegen Bittergeschmack zugesetzt wird.

12. Verfahren nach einem der Ansprüche 1 bis 10, **dadurch gekennzeichnet,** daß ein Caseinat, vorzugsweise Natrium-Caseinat als Maskierungsmittel gegen Bittergeschmack zugesetzt wird.

13. Verfahren nach einem der Ansprüche 1 bis 12, **dadurch gekennzeichnet,** daß Hanfblütenextrakt und/oder Schalenbestandteile von Hanfsamen zugesetzt werden.

14. Verfahren nach einem der Ansprüche 1 bis 13, **dadurch gekennzeichnet,** daß das aufbereitete Ausgangsgut in einem Behältnis, vorzugsweise einem lichtdichten Folienbeutel unter Vakuum oder Inertgas gegen Zutritt von Sauerstoff geschützt verpackt wird.

15. Hanfsamen, insbesondere als gesonderte Komponente einer Backmischung, aufbereitet nach einem der vorhergehenden Ansprüche.

16. Hanfbackwaren, insbesondere Hanfbrot, enthaltend nach einem der Ansprüche 1 bis 14 aufbereitete Hanfsamen.

17. Hanfbackwaren nach Anspruch 16, **gekennzeichnet durch** Süßlupinenmehl als Zusatzstoff zur Verbesserung der Frischhaltung und Verarbeitungseigenschaften.

18. Hanfbackwaren nach Anspruch 16 oder 17, **gekennzeichnet durch** Kartoffelflocken als Zusatz zur Erhöhung des Wasserbindevermögens.
